# DEMANDE DE BREVET EUROPEEN

(11) **EP 1 952 694 A1**
(43) Date de publication de la demande: **06.08.2008**
(21) Numéro de dépôt: 08103850.7
(22) Date de dépôt: 30.11.2007
(51) Int. Cl.: A23B 7/154, A23B 7/157, A23B 7/158, A23L 3/3553, A23L 3/3589

(54) **Nouveau procédé de traitement des fruits ou de légumes par l'ion phosphoreux et les compositions correspondantes**

(30) Priorité: 07.12.2006 FR 0610688
(62) Demande divisionnaire de: 07291430.2
(71) Demandeur: XEDA INTERNATIONAL, 13670 Saint-Andiol (FR)
(72) Inventeur: SARDO, Alberto, 13160 CHATEAURENARD (FR)
(74) Mandataire: Jacobson, Claude

(57) **Abrégé**

La présente demande concerne des combinaisons d'acide phosphoreux (AP) et d'eugénol ou d'isoeugénol, ainsi que les compositions traitantes pour fruits et légumes les contenant.

## Description

La présente invention concerne un procédé de traitement de fruits ou de légumes. En effet, il importe que les fruits et légumes ne perdent pas leur qualité organoleptique et conservent un aspect engageant lors de leur mise sur le marché pour une consommation rapide. Or, après leur récolte, les fruits et légumes sont couramment stockés pendant des périodes relativement longues avant d'être mis sur le marché. Les phénomènes susceptibles d'altérer l'aspect et le goût des fruits et légumes sont notamment la prolifération de champignons et de bactéries à leur surface. Ces détériorations sont encore plus rapides au niveau des micro-blessures et des entailles apparaissant sur la peau au cours du stockage ou de la manipulation des fruits et légumes. Un autre phénomène susceptible d'endommager les fruits et légumes est le phénomène d'échaudure qui se manifeste par un noircissement de la peau des fruits et légumes touchés.

L'acide phosphonique (H-PO₃H₂) (AP) est aussi appelé acide phosphoreux (H₃PO₃). Ce composé a une activité fongicide similaire à celle du Fosetyl Al (éthylphosphonate d'aluminium). Ce composé, en effet, se dégrade en quelques heures dans les tissus des plantes en AP.

L'activité de l'AP est surtout connue sur les mildious (phycomycètes). En revanche, en ce qui concerne les ascomycètes et les champignons imparfaits parasites des fruits et légumes *(Fusarium spp., Botrytis sp., Phlyctema sp., Penicillium spp.,* etc.), l'AP a peu d'efficacité.

Des tentatives ont cependant été faites d'appliquer l'AP (ou le Fosetyl Al) en post-récolte. En effet, les limites maximales de résidu autorisées (LMR) (exprimés en AP) après traitement de culture sont proches de 50 ppm : on pourrait donc traiter en post- récolte avec des doses relativement élevées. A titre de comparaison, la LMR du Pyriméthanil est seulement (pour le moment) de 0,3 ppm.

Malheureusement, à température ambiante, notamment sur les *Penicilliums,* l'activité est très faible même à des doses de traitement proches de 10 000 ppm dans le cas des *Penicilliums* d'oranges.

De façon inattendue, les présents inventeurs ont combiné l'AP avec la thermothérapie, c'est-à-dire un traitement à l'eau chaude avec une température voisine de 50°C. Contre toute attente, les résultats ont été excellents en ce qu'ils démontrent une potentialisation de l'activité de l'AP.

Généralement, l'efficacité obtenue avec des doses réduites, jusqu'à 1/5 de la dose d'AP utilisée à température ambiante, est équivalente sinon supérieure. Globalement, les quantités de résidus sont diminuées.

La présente invention concerne donc un procédé de traitement de fruits ou de légumes avec l'AP à chaud. Le présent procédé présente une synergie d'efficacité, notamment avec des doses d'AP inférieures à 10 000 ppm. Cette synergie est particulièrement observée sur les *Penicilliums.* Le procédé selon l'invention convient donc particulièrement au traitement post-récolte.

Selon un premier aspect, la présente invention concerne donc un procédé de traitement de fruits ou de légumes comprenant l'application d'une composition traitante à base d'acide phosphoreux, à chaud, de préférence à température comprise entre 30° et 60 °C, préférentiellement entre 40° et 60 °C et encore plus préférentiellement entre 45° et 55 °C, notamment entre 48° et 52°C, par exemple 50 °C.

Selon un autre aspect préféré, le temps de contact de fruits ou de légumes avec la solution de traitement est compris entre 10 secondes et 10 minutes.

L'application de la composition traitante peut être effectuée par tout moyen connu en soi, notamment par aspersion ou immersion des fruits ou légumes, dans la solution de traitement maintenue à la température désirée ; les fruits et légumes peuvent être ainsi traités lorsqu'ils sont stockés en caisses ou palettes, ou encore hors caisse ou palette, avant leur commercialisation, comme c'est le cas pour les oranges par exemple.

Plus préférentiellement, lorsque les fruits et légumes en caisses ou palettes sont traités par immersion, la composition traitante peut être appliquée au moyen d'un dispositif tel que décrit dans la demande FR 01 096 27. Ce dispositif est particulièrement avantageux en ce qu'il permet l'application homogène de la solution chaude sur les fruits et légumes stockés sur palette ou caisse.

Généralement, les fruits et légumes sont stockés dans des caisses/palettes fermées par des couvercles. Les fonds, les parois latérales et les couvercles de ces caisses/palettes sont ajourés pour permettre à la composition traitante de baigner les fruits ou légumes à traiter.

Lorsque les fruits ou légumes contenus dans une caisse/palette sont complètement immergés, ils s'accumulent soit au fond de la caisse/palette, si leur densité est supérieure à celle de la composition aqueuse traitante, soit sous le couvercle de la caisse/palette, si leur densité est inférieure à celle de la composition aqueuse traitante. Quoiqu'il en soit, on constate, à l'issue du procédé de traitement, que les points de contact entre les fruits et légumes n'ont pas été traités.

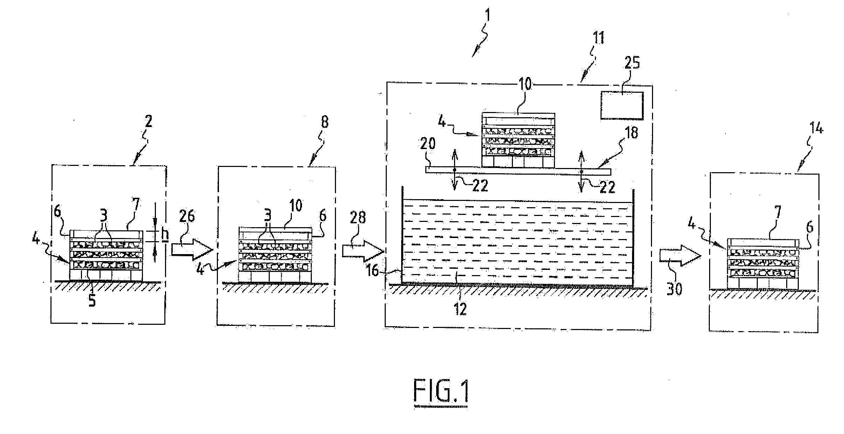

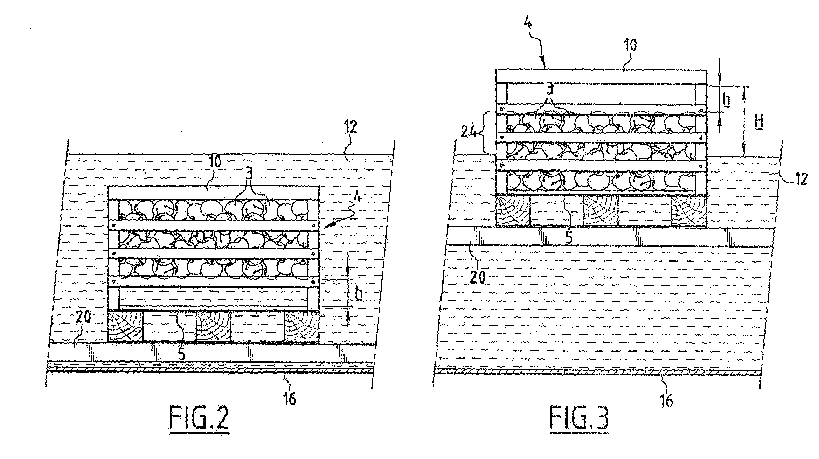

La demande FR 01 09 627 résout ce problème en fournissant un procédé qui permet de traiter de manière plus homogène la surface des fruits ou légumes. Ce procédé, incorporé ici par référence, est décrit plus précisément ci-après et dans les figures 1 à 3.

Il comprend les étapes consistant à :
- fournir un bain d'une composition traitante (12),
- placer les fruits ou légumes (3) dans des moyens (4) de retenue,
- abaisser les moyens (4) de retenue pour immerger complètement les fruits ou légumes (3) dans le bain,
- soulever les moyens (4) de retenue pour retirer complètement les fruits ou légumes du bain,
et, après immersion complète des fruits ou légumes (3) et avant leur retrait du bain, les étapes intermédiaires consistant à :
- soulever les moyens (4) de retenue pour qu'au moins une partie des fruits ou légumes (3) qui y sont contenus émergent du bain, et
- abaisser les moyens (4) de retenue pour immerger à nouveau complètement les fruits ou légumes (3) qu'ils contiennent dans le bain.

De préférence, les étapes intermédiaires sont reproduites suivant un cycle de période comprise entre 2 secondes et 2 minutes.

Ce procédé convient particulièrement pour la mise en oeuvre du procédé de traitement de fruits ou de légumes avec l'acide phosphoreux, à titre de composition traitante (12), à chaud, de préférence à température comprise entre 30 ° et 60 °C, préférentiellement entre 40 ° et 60 °C et encore plus préférentiellement entre 45° et 55 °C, notamment entre 48° et 52 °C, par exemple 50 °C selon l'invention.

Selon un autre aspect préféré, la densité de la composition traitante est supérieure à celle des fruits ou légumes à traiter et en ce que, lors de l'étape intermédiaire de soulèvement des moyens (4) de retenue, le poids des fruits ou légumes (3) émergés est supérieur à la poussée d'Archimède s'exerçant sur les fruits ou légumes (3) encore immergés.

Ainsi, la composition traitante (12) peut comprendre en outre un agent d'augmentation de sa densité, tel que un silicate de métal alcalin, un phosphate de métal alcalin, un bicarbonate de métal alcalin, un carbonate de métal alcalin ou un sulfonate de métal alcalin. On préfère notamment un phosphate de potassium tel que le pyrophosphate de potassium ou le métaphosphate de potassium.

Avantageusement, selon l'invention, le temps total d'immersion complète des fruits ou légumes (3) dans la composition traitante est inférieur à 10 minutes.

Selon un autre objet, la présente invention concerne également le kit permettant l'application de la composition traitante selon l'invention aux fruits et légumes. Ledit kit comprend l'installation décrite dans la demande FR 01 09 627 avec la composition traitante selon la présente invention à base d'acide phosphoreux.

Le kit selon l'invention comprend donc :
i) une installation comprenant :
   - des moyens de conditionnement des fruits ou légumes dans des moyens (4) de retenue,
   - des moyens (16) de formation d'un bain d'une composition traitante (12),
   - des moyens (18) d'abaissement et de soulèvement des moyens (4) de retenue, et
   - une unité de commande des moyens (18) d'abaissement et de soulèvement adaptée, d'une part, pour commander des étapes consistant à :
   - abaisser les moyens (4) de retenue pour immerger complètement les fruits ou légumes (3) qui y sont contenus dans le bain, et
   - soulever les moyens (4) de retenue pour retirer complètement les fruits ou légumes (3) du bain, et d'autre part pour commander entre ces deux étapes des étapes intermédiaires consistant à :
   - soulever les moyens (4) de retenue pour qu'au moins une partie des fruits ou légumes (3) qui y sont contenus émergent du bain, et
   - abaisser les moyens (4) de retenue pour immerger à nouveau complètement les fruits ou légumes (3) qu'ils contiennent dans le bain;
      et
ii) une composition traitante (12) à base d'acide phosphoreux, ladite composition traitante présentant une température comprise entre 30° et 60°C, préférentiellement entre 40 ° et 60 °C et encore plus préférentiellement entre 45 ° et 55°C, notamment entre 48° et 52°C, par exemple 50°C selon l'invention.

Selon un autre aspect avantageux, lorsque les fruits et légumes stockés en caisse ou palettes sont traités par aspersion, on opère selon le procédé suivant comprenant les étapes consistant à :
- réunir des moyens de conditionnement contenant les fruits ou légumes en un bloc sensiblement compact dans un logement délimité par une ceinture de parois latérales à l'intérieur d'une enceinte, les parois latérales s'étendant selon une direction longitudinale, au moins une des parois latérales étant déformable entre une configuration d'engagement et une configuration de libération du bloc,
- amener la ou chaque paroi latérale déformable dans sa configuration d'engagement du bloc, et
- faire traverser le logement longitudinalement par une composition traitante ayant une température comprise entre 30°C et 60°C, avec un débit compris entre 20 et 150m³/m²/h et pendant une durée comprise entre 10s et 10mn.

Préférentiellement, le débit est compris entre 50 et 100 m³/m²/h et la durée comprise entre 1 et 5mn.

Le kit correspondant pour la mise en oeuvre de ce procédé comprenant :
- une enceinte comprenant une ceinture de parois latérales s'étendant selon une direction longitudinale, la ceinture délimitant à l'intérieur de l'enceinte un logement de réception des fruits ou de légumes à traiter, au moins une des parois latérales étant déformable entre une configuration d'engagement et une configuration de libération d'un chargement disposé à l'intérieur du logement,
- un dispositif d'alimentation de l'enceinte en composition traitante et d'évacuation de composition traitante hors de l'enceinte,
- des moyens de chauffage de la composition traitante, et
- un système de déformation des parois déformables.
et
ii) une composition traitante à base d'acide phosphoreux, ladite composition traitante présentant une température comprise entre 30° et 60°C, préférentiellement entre 40° et 60 °C et encore plus préférentiellement entre 45° et 55°C, notamment entre 48° et 52°C, par exemple 50°C selon l'invention, fait donc également partie de la présente invention.

De préférence, les dites parois sont des parois gonflables.

Selon un autre aspect avantageux, les concentrations d'acide phosphoreux dans la composition traitante sont comprises entre 200 ppm et 10 000 ppm, de préférence entre 500 ppm et 5000 ppm, plus préférentiellement entre 2000 et 4000 ppm.

La quantité de produit appliqué dépend de la quantité de fruits et légumes à traiter, ainsi que des conditions de stockage et le degré de maturité des fruits et légumes stockés et/ou souhaité. En général, on applique entre 3000 et 10000 litres de composition traitante aux concentrations indiquées ci-dessus, pour 100-300 tonnes de fruits et légumes à traiter.

Selon un autre aspect avantageux, la composition traitante selon l'invention comprend, outre l'acide phosphoreux, un autre fongicide. Préférentiellement, ledit fongicide est choisi parmi tout fongicide habituellement utilisé pour le traitement de fruits ou de légumes, notamment les fongicides appliqués en post-récolte. On peut notamment mentionner l'eugénol, l'isoeugénol ou l'un de leurs sels, le thiabendazole (TBZ), l'orthophénylphénol, l'imazalil ou le phosphite d'imazalil.

Les combinaisons comprenant de l'acide phosphoreux avec ledit fongicide habituellement utilisé pour le traitement de fruits ou de légumes font également partie de la présente invention. De préférence, le fongicide est choisi parmi l'eugénol, l'isoeugénol ou l'un de leurs sels, le TBZ, l'orthophénylphénol, l'imazalil ou le phosphite d'imazalil ; on préfère notamment l'eugénol, un sel de l'eugénol acceptable sur le plan alimentaire, l'isoeugénol, un sel de l'isoeugénol acceptable sur le plan alimentaire, et leurs mélanges.

Les combinaisons selon l'invention conviennent particulièrement à une application à chaud, c'est-à-dire à température comprise entre 3 et 60°C, préférentiellement entre 40° et 60 °C et encore plus préférentiellement entre 45° et 55°C, notamment entre 48°et 52°C, par exemple 50°C selon l'invention.

Selon un aspect préféré, le fongicide est présent aux concentrations normalement utilisées. Ainsi, l'eugénol peut être utilisé à des concentrations comprises entre 300 et 4500 ppm, l'imazalil à des concentrations comprises entre 100 et 1000 ppm, l'orthophénylphénol à des concentrations comprises entre 500 et 3000ppm, le TBZ à des concentrations comprises entre 100 et 1000ppm.

L'acide phosphoreux et le fongicide peuvent être appliqués simultanément ou séparément ou de façon séquencée dans le temps.

Les compositions traitantes et les combinaisons selon l'invention appliquées à chaud montrent des résultats synergiques sur un large spectre de souches, notamment les souches caractéristiques apparaissant en post-récolte, en particulier les *Penicilliums.* Par ailleurs, les combinaisons selon l'invention démontrent une activité significative sur des souches résistantes à l'acide phosphoreux.

Selon l'invention, on entend par "acide phosphoreux" (ou "acide phosphonique" ou "phosphite") tout composé permettant la libération de l'ion phosphite H₂P0₃⁻. On peut ainsi citer l'acide phosphonique (ou HPO₃H₂), l'acide phosphoreux (H₃PO₃) ou encore le phosphite de potassium, phosphite de sodium, phosphite d'ammonium ou phosphite de magnésium.

Selon l'invention, l'expression "composition traitante" désigne une composition comprenant de l'acide phosphoreux. Généralement, la composition traitante est une solution aqueuse.

Les compositions traitantes peuvent également contenir, en sus, un fongicide dans le cadre des combinaisons selon l'invention.

Les compositions traitantes peuvent également comprendre tout additif habituellement utilisé, notamment pour le traitement de fruits ou de légumes.

### Figures

La figure 1 est une vue schématique latérale d'une installation de traitement de fruits ou légumes selon l'invention ;

Les figures 2 et 3 sont des vues partielles, schématiques, latérales et agrandies, illustrant deux étapes intermédiaires successives du procédé mis en oeuvre par l'installation de la figure 1.

Les exemples suivants sont donnés à titre illustratif et non limitatif de la présente invention.

### 1 - Etude in vitro de l'activité de l'acide phosphonique sur le P. expansum

Comme le montre le tableau 1, l'activité de l'AP à température ambiante est partielle même à 4000 ppm.

La combinaison avec la thermothérapie renforce considérablement l'efficacité, même à 1000 ppm.

**Tableau 1 : Efficacité de l'AP (sous forme de « Kphos ») sur la germination des spores du P. expansum (22°C)**

| Traitement | Spores germées | |
|---|---|---|
| | 24 heures | 48 heures |
| Contrôle | 100 a | 100 a |
| Contrôle 50°C, 2min | 85 a | 93 a |
| Ac. Phosphonique 1000 ppm | 27 b | 34 b |
| Ac. Phosphonique 4000 ppm | 11 c | 11 c |
| Ac. Phosphonique 1000 ppm 50°2 min | 0 d | 21 c |
| Ac. Phosphonique 4000 ppm 50°2 min | 0 d | 0 c |
| Les valeurs suivies d'une même lettre ne sont pas statistiquement différentes (test Student P = 0.05) | | |

| | | |
|---|---|---|
| Kphos = acide phosphonique neutralisé par KOH (pH 6.5). | | |

### 2 - Etude in vivo de l'activité de l'acide phosphonique (Kphos) sur des infections de P. expansum sur pommes

**Tableau 2 : Efficacité de l'AP (sous forme de « Kphos ») sur l'évolution des infections naturelles causées par P. expansum sur pommes Elstar biologiques (2 °C)**

| * nombre de jours après le traitement | % pommes avec symptômes | | | |
|---|---|---|---|---|
| | 2001 - 2002 * | | 2002 - 2003 * | |
| Traitement | 90 jours | 180 jours | 90 jours | 180 jours |
| Contrôle | 4.6 a | 15.6 a | 6.0 a | 16.5 a |
| Contrôle 50°C 2min | 4.2 a | 15.3 a | 5.6 a | 15.5 a |
| AP 1000 ppm | 3.1 a | 13.1 a | 4.9 a | 11.1 a |
| AP 1000 ppm - 50 °C 2 min | 0.0 b | 4.7 b | 0.0 b | 6.3 c |

| Références chimiques | | | | |
|---|---|---|---|---|
| Pyriméthanil 250 ppm | 4.1 a | 16.2 a | 4.0 a | 19.0 a |
| Pyriméthanil 500 ppm | 3.2 a | 21.3 a | 0.0 a | 14.0 a |
| Fluidoxonil 200 ppm | 1.1 b | 4.9 b | 4.0 a | 7.0 c |
| Traitements effectués après 26 jours de conservation à 2°C | | | | |

Dans cette expérimentation, étant donné la faible activité *in vitro* de l'AP à température ambiante sur *P. expansum,* il n'est pas surprenant de retrouver le même phénomène *in vivo,* soit une activité proche de 0.

En revanche, en combinaison avec la thermothérapie, l'efficacité est comparable voire supérieure à celle des meilleurs fongicides synthétiques actuellement disponibles.

### 3 - Efficacité de l'AP et de la thermothérapie sur les infections à P. digitatum sur oranges

**Tableau 3 : Activité de l'AP en combinaison avec le Bioxeda et la thermothérapie sur oranges Navel**

| Traitements | Oranges avec symptômes | |
|---|---|---|
| | 9 jours | 18 jours |
| Contrôle | 95% a | 100 % a |
| Contrôle 48°C 2 min | 45% b | 83% b |
| Bioxeda (1) 48°C 2 min | 4 % b | 60 % b |
| Bioxeda + AP (2) 48°C 2 min | 0 % b | 26 % c |

| | | |
|---|---|---|
| 1- Bioxeda, matière active : eugénol 1,8 g/L 2- AP 1000 ppm (« Kphos ») | | |

Dans cette expérimentation, les oranges ont été blessées puis inoculées par le *P. Digitatum* (500 000 sp/mL) et traitées 15 heures plus tard ; la conservation s'effectue à 5 °C.

On remarque l'effet complémentaire de l'AP à 9 jours et surtout à 18 jours, où le taux de pourritures est divisé par 2,3 en présence de l'AP (26 % au Bioxeda 60 % et 100 % dans le témoin).

### 4 - Efficacité de l'AP sur les infections à P. digitatum sur oranges. Comparaison avec un mélange de trois fongicides. Tous les traitements sont combinés à la thermothérapie

**Tableau 4 : Efficacité de l'AP combiné avec la thermothérapie sur P. digitatum (orange Navel). Comparaison.**

| Traitements | Nombre de fruits | Oranges avec symptômes 12 J 5°C + 3 J SPC (1) |
|---|---|---|
| Contrôle | 200 | 9,0 a |
| Thermothérapie | 300 | 1.0 b |
| + Imazalil 400 ppm | | |
| + TBZ 450 ppm | | |
| + OPP 1500 ppm | | |
| Thermothérapie + acide phosphonique | 200 | 0.5 b |
| 2000 ppm | | |

| | | |
|---|---|---|
| (1) SPC: Simulation de période de commercialisation soit 3 jours à température ambiante. TBZ : thiabendazole OPP : orthophénylphénol. | | |

Comme le montre le tableau 4 cette fois sur infections naturelles, l'AP se montre supérieur ou équivalent au traitement appliqué avec trois fongicides habituellement utilisés dans le cas des pourritures à *Penicillium* sur oranges.

### 5 - Efficacité de l'AP sur les infections naturelles à P. digitatum sur oranges, combiné avec la thermothérapie

Une nouvelle expérimentation réalisée dans les conditions très proches de la pratique a été réalisée : infections naturelles, conservation au froid, simulation de périodes de conservation (SPC).

**Tableau 5 : Efficacité de l'acide phosphonique combiné à la thermothérapie sur P. digitatum des oranges (Navel).**

| Traitements | Nombre de fruits | % d'oranges avec symptômes 15 J 5°C + 5 J SPC |
|---|---|---|
| Témoin | 600 | 10.2 % |
| Thermothérapie 50°C 3 min | 400 | 6.5% |
| AP 2000 ppm | 400 | 6.0% |
| AP 4000 ppm | 400 | 5.1 % |
| Thermothérapie + AP 2000 ppm | 300 | 4.0 % |
| Thermothérapie + AP 4000 ppm | 300 | 2.7 % |

Le tableau montre une excellente efficacité de l'AP, notamment à 4000 ppm combiné à la thermothérapie (73,5%). Aucun phénomène de phytotoxicité n'a été trouvé, ce qui laisse supposer qu'une augmentation de la concentration, donc de l'efficacité, est encore possible. Avec une solution résiduelle sur les fruits de 1,5 l/tonne à 4000 ppm soit 6 g/tonne, le taux de résidus théorique, environ 6 ppm serait très faible pour cette molécule. La LMR étant de 50 ppm on pourra envisager une augmentation de la dose si nécessaire.

### Conclusion :

Ces différentes expérimentations montrent que la thermothérapie potentialise de façon synergique l'effet fongicide de l'AP. On notera que les fongicides actuellement utilisés génèrent des souches dotées d'un haut niveau de résistance qui conduit à l'impuissance face aux infections (cas du thiabendazole, du carbendazime et de l'imazalil principalement). Or, il n'y a pas de phénomène de résistance acquise à l'AP.

### 6 - Activité des combinaisons selon l'invention

### 6.1. AP/eugénol

Des oranges Washington inoculées au *Penicillium digitatum* ont été mises en contact avec une solution d'eugénol/phosphite de potassium contenant 1100 ppm d'eugénol et 1600 ppm de phosphite de potassium pendant un temps de contact de 2 minutes, à 38° et 48°C. Les fruits traités ont été maintenus à 7°C puis examinés après 9 et 18 jours. Ils ont été comparés avec des fruits traités avec l'eugénol seul aux mêmes conditions et des fruits inoculés non traités.

**Le tableau ci-après indique les pourcentages de fruits pourris :**

| | Après 9 jours | Après 18 jours |
|---|---|---|
| 38°C Témoin | 95 | 100 |
| 48°C Témoin | 68 | 90 |
| 38 °C Eugénol | 12 | 73 |
| 48 °C Eugénol | 4 | 60 |
| 38°C Phosphite de potassium | 14 | 76 |
| 48°C Phosphite de potassium | 3 | 44 |
| 38°C Eugénol / Phosphite de Potassium | 11 | 68 |
| 48°C Eugénol / Phosphite de Potassium | 0 | 26 |

Ces résultats montrent qu'il y a un effet certain de l'augmentation de la température sur l'activité de l'eugénol et surtout que cette activité progresse fortement en présence du phosphite aux mêmes doses et temps de contact.

### 6.2. AP/Imazalil

Des oranges Valencia inoculées avec une souche de *Penicillium digitatum* résistante à l'Imazalil ont été traitées à 52°C avec un temps de contact de 2 minutes avec :
- 300 ppm Imazalil ;
- 3000 ppm phosphite de potassium ;
- les deux produits mélangés à 300 ppm Imazalil et 3000 ppm phosphite de potassium.

Les résultats sont illustrés dans le tableau suivant :

| Traitements | N° d' essai | Nombre de fruits | | % de fruits pourris | % moyen de fruits pourris |
|---|---|---|---|---|---|
| | | pourris | intacts | | |
| Inoculés | 1 | 10 | 0 | 100 | **100** |
| | 2 | 10 | 0 | 100 | |
| | 3 | 10 | 0 | 100 | |
| | 4 | 10 | 0 | 100 | |
| Témoin 52°C | 1 | 7 | 3 | 70 | **85** |
| | 2 | 9 | 1 | 90 | |
| | 3 | 9 | 1 | 90 | |
| | 4 | 7 | 3 | 70 | |
| Phosphite de potassium 52°C | 1 | 5 | 5 | 50 | **42,5** |
| | 2 | 6 | 4 | 60 | |
| | 3 | 3 | 7 | 30 | |
| | 4 | 3 | 7 | 30 | |
| Imazalil 52°C | 1 | 2 | 8 | 20 | **42,5** |
| | 2 | 7 | 3 | 70 | |
| | 3 | 3 | 7 | 30 | |
| | 4 | 5 | 5 | 50 | |
| Phosphite de calcium + Imazalil 52 °C | 1 | 2 | 8 | 20 | **10** |
| | 2 | 2 | 8 | 20 | |
| | 3 | 0 | 10 | 0 | |
| | 4 | 0 | 10 | 0 | |

Comme il apparaît du tableau ci-dessus, chaque produit appliqué individuellement divise par 2 le taux de pourriture (42,5% contre 85%), tandis que la combinaison des deux produits divise le taux de pourriture par 8,5.

Ces résultats démontrent nettement l'effet synergique des combinaisons selon l'invention.

## Revendications

1. Combinaison comprenant un composé permettant la libération de l'ion phosphite H₂PO₃- et un fongicide choisi parmi l'eugénol, l'isoeugénol ou l'un de leurs sels.

2. Combinaison selon la revendication 1 tel que ledit composé permettant la libération de l'ion phosphite H₂PO₃- et le fongicide sont appliqués simultanément, séparément ou de façon séquencée dans le temps.

3. Combinaison selon la revendication 1 ou 2 telle que ledit fongicide est l'eugénol ou l'un de ses sels.

4. Combinaison selon la revendication 1, 2 ou 3 telle que ledit composé permettant la libération de l'ion phosphite est choisi parmi l'acide phosphonique (ou HPO₃H₂) l'acide phosphoreux (H₃PO₃), le phosphite de potassium, phosphite de sodium, phosphite d'ammonium ou phosphite de magnésium.

5. Composition traitante pour fruits et légumes comprenant la combinaison selon l'une quelconque des revendications 1 à 4 en solution aqueuse.

6. Composition traitante selon la revendication 5 telle que les concentrations dudit composé permettant la libération de l'ion phosphite H₂PO₃- dans la composition traitante sont comprises entre 200 ppm et 10 000 ppm.

7. Composition traitante selon la revendication 5 ou 6 telle que les concentrations dudit composé permettant la libération de l'ion phosphite H₂PO₃⁻ dans la composition traitante sont comprises entre 500 ppm et 5000 ppm.

8. Composition traitante selon la revendication 5, 6 ou 7 telle que les concentrations dudit composé permettant la libération de l'ion phosphite H₂PO₃⁻ dans la composition traitante sont comprises entre 2000 et 4000 ppm.

9. Composition traitante selon l'une quelconque des revendications 5 à 8 telle que la concentration d'eugénol dans la composition traitante est comprise entre 300 et 4500 ppm.
